# FASCICULE DE BREVET EUROPEEN

(11) **EP 2 936 786 B1**
(45) Date de publication et mention de la délivrance du brevet: **24.02.2021**
(21) Numéro de dépôt: 13798243.5
(22) Date de dépôt: 08.11.2013
(51) Int. Cl.: H04L 29/12, H04W 40/02, H04W 84/20

(54) **PROCEDE DE FUSION DE DEUX SOUS-RESEAUX EN UN UNIQUE RESEAU AD HOC IMPLEMENTANT LE PROTOCOLE D2HCP**
VERFAHREN ZUM ZUSAMMENFÜHREN ZWEIER SUBNETZE IN EIN EINZIGES AD-HOC-NETZWERK UNTER VERWENDUNG DES D2HCP-PROTOKOLLS
METHOD FOR MERGING TWO SUB-NETWORKS INTO A SINGLE AD HOC NETWORK IMPLEMENTING THE D2HCP PROTOCOL

(30) Priorité: 21.12.2012 FR 1203587; 20.08.2013 FR 1301963
(43) Date de publication de la demande: 28.10.2015
(60) Demande divisionnaire: 20186279.4
(73) Titulaire: AIRBUS DS SAS, 78990 Elancourt (FR)
(72) Inventeur: DENIAUD, Thierry, F-78180 Montigny le Bretonneux (FR); EL SHABRAWY, Karim, F-92240 Malakoff (FR)
(74) Mandataire: Cabinet Camus Lebkiri
(86) Numéro de dépôt international: PCT/EP2013/003370
(87) Numéro de publication internationale: WO 2014/094937

(56) Documents cités:
- NESARGI S ET AL: "MANETconf: configuration of hosts in a mobile ad hoc network", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 2, 23 juin 2002 (2002-06-23), pages 1059-1068, XP010593670, DOI: 10.1109/INFCOM.2002.1019354 ISBN: 978-0-7803-7476-8
- LUIS JAVIER GARCÍA VILLALBA ET AL: "Distributed Dynamic Host Configuration Protocol (D2HCP)", SENSORS, vol. 11, no. 12, 18 décembre 2011 (2011-12-18), pages 4438-4461, XP055101650, ISSN: 1424-8220, DOI: 10.3390/s110404438
- WANGI N I C ET AL: "Address autoconfiguration in wireless ad hoc networks: protocols and techniques", IEEE WIRELESS COMMUNICATIONS, IEEE SERVICE CENTER, PISCATAWAY, NJ, US, vol. 15, no. 1, 1 février 2008 (2008-02-01), pages 70-80, XP011480404, ISSN: 1536-1284, DOI: 10.1109/MWC.2008.4454707
- LUIS JAVIER VILLALBAA ET AL: "An Extension Proposal of D2HCP for Network Merging", JOURNAL OF UBIQUITOUS SYSTEMS AND PERVASIVE NETWORKS, vol. 3, no. 1, 15 septembre 2011 (2011-09-15), pages 35-40, XP055101607, ISSN: 1923-7324, DOI: 10.5383/JUSPN.03.01.007

## Description

### DOMAINE

Le domaine de l'invention concerne un procédé et un système permettant de détecter une situation de fusion de deux sous-réseaux ad hoc implémentant le protocole D2HCP.

### ETAT DE L'ART

La gestion des découvertes de nouveaux nœuds dans un réseau doit prendre en compte un mécanisme de configuration de l'allocation d'adresses IP de ces nouveaux nœuds. Selon le type de réseau et du protocole de routage implémenté il existe différentes approches d'allocation d'adresses IP. Le protocole DHCP permet de mettre en œuvre une gestion dynamique des adresses IP, notamment de leur allocation. En revanche DHCP nécessite un serveur centralisé pour la gestion de ses fonctions.

En revanche ce protocole n'est pas adapté aux réseaux ad hoc.

Selon les solutions exposées ci-après, une problématique est de trouver un compromis entre une première et une seconde approche.

Selon une première approche :
- une architecture souple peut être déployée dans laquelle chaque nœud gère peu de données concernant les autres nœuds ;
- une allocation temporaire d'adresses est nécessaire ;
- une configuration par étapes est nécessaire.

Selon une seconde approche :
- une architecture plus complète est envisagée dans laquelle les nœuds ont une bonne connaissance du réseau
- une implémentation reste complexe du fait des traitements dynamiques que doivent supporter les nœuds
- une complexité de gestion des nœuds et une augmentation du trafic sont nécessaires.

Une solution appelée MANETConf développée par Nesargi et Prakash "MANETconf: configuration of hosts in a mobile ad hoc network", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; vol. 2, 23 juin 2002, pages 1059-1068, XP010593670; ISBN 978-0-7803-7476-8) permet de gérer l'arrivée de nœuds dans un réseau ad hoc. Un nœud entrant émet un message de découverte et établit un premier échange avec le nœud lui répondant le plus rapidement. Ensuite, une allocation d'adresse IP est effectuée par ce nœud au nœud entrant sous réserve que l'adresse IP soit laissée libre par tous les nœuds du réseau. Cette dernière étape nécessite l'émission de messages dans le réseau et l'attente de réponses de la part de tous les nœuds. Cette solution comporte l'inconvénient de gérer de nombreux messages au travers le réseau et impose donc un trafic important.

Une autre solution impose l'implémentation du protocole DAAP qui permet de gérer l'arrivée de nœuds dans un réseau par un algorithme permettant de déterminer un maitre dynamiquement. Dans cette solution, chaque nœud envoie périodiquement des messages de découverte aux nœuds voisins avec l'identifiant du réseau de manière à détecter des situations de fusion. En revanche, c'est le nœud maitre qui gère l'allocation de l'identifiant réseau et l'adresse IP de plus haut niveau. Un problème de cette solution est que si le nœud maitre se déconnecte, du réseau auquel il est attaché, le service n'est plus maintenu. En outre, il va former un nouveau réseau et par conséquent, plusieurs réseaux vont pouvoir avoir le même identifiant. Ce protocole ne semble pas adapté aux problématiques d'un réseau ad hoc mobile devant assurer un minimum de sécurité.

Une autre solution appelée système « Buddy » est basée sur une approche décentralisée d'un réseau. Dans cette solution, chaque nœud comprend un ensemble d'adresses IP libres prévues pour les allocations d'adresses de nouveaux nœuds entrants. Les ensembles d'adresses sont disjoints d'un nœud à l'autre. Ce système permet de gérer des situations de fusion de réseau par la gestion d'uniques identifiants réseaux. Un des inconvénients de ce système est la génération d'un trafic important de messages d'un protocole de routage encombrant le réseau mobile ad hoc et donc ses performances. Notamment, l'encombrement du réseau est important lorsqu'un nœud entre ou quitte le réseau pour prévenir les autres nœuds.

Une solution appelée EMAP désignant « Extenssible MAGNET Auto-configuration Protocole » permet l'allocation d'une adresse unique à un nœud pour les communications internes au MANET. Un nœud entrant génère des adresses IP valides et vérifie leur unicité via une requête « Duplicate Adress Détection (DAD) ».

Un problème de cette solution réside dans la gestion de l'unicité des adresses allouées et des risques de conflits d'adresses pouvant survenir en cas de fusion de réseau.

Une autre solution appelée NOA-OLSR signifiant « No Overhead Auto configuration OLSR » permet de gérer une entrée progressive d'un nouveau nœud dans un réseau ad hoc. Cette solution comporte différentes étapes de configuration permettant d'allouer une adresse dynamiquement à nouvel arrivant dans le réseau. Bien que cette solution permette un déploiement efficace limitant la charge du réseau, un des principaux inconvénients est la non garantie de l'allocation d'une adresse IP unique à un nœud entrant dans le réseau.

Le protocole D2HCP basé sur une architecture de type système Buddy permet de garantir l'allocation d'une unique adresse IP à un nœud entrant dans un réseau ad hoc. Un avantage est qu'avec ce protocole associé au protocole de routage OLSR chaque nœud a une bonne connaissance de la topologie du réseau et prend en compte les arrivées et départs des nœuds dans le réseau.

En revanche, ces mécanismes ne permettent pas de gérer actuellement la découverte d'un nouveau sous-réseau impliquant des règles d'allocations d'adresses IP à des nœuds de part et d'autre de chaque sous-réseau se découvrant tout en maintenant un flux de données généré ne perturbant pas les performances du réseau.

### RESUME DE L'INVENTION

L'invention permet de résoudre les inconvénients précités.

L'objet de l'invention concerne en premier lieu un procédé de détection d'une situation de fusion de deux sous-réseaux d'un réseau ad hoc implémentant le protocole d'adressage D2HCP, selon la revendication 1.

Avantageusement, l'ensemble de données d'authentification est une table comprenant des identifiants de nœuds et leurs adresses IP associées.

Avantageusement, une situation de fusion nécessitant une fusion des deux sous-réseaux est reconnue par un premier nœud lorsqu'une trame de découverte, d'un protocole de routage est reçue en provenance du second nœud et comporte un identifiant inconnu du premier nœud et que le second nœud a déjà une adresse IP.

Avantageusement, les données d'initialisation comportent en outre une variable indiquant qu'une situation de fusion est engagée, appelée variable de fusion.

Avantageusement, une situation de fusion nécessitant une fusion des deux sous-réseaux est reconnue par un second nœud lorsqu'il reçoit, d'un premier nœud l'ayant préalablement découvert, une variable indiquant qu'une situation de fusion a été reconnue par le premier nœud.

Avantageusement, une génération d'un message, dit message de gèle, par le nœud maitre à tous les nœuds connus de son ensemble de données d'authentification y compris au nœud esclave un message comprenant les identifiants des deux sous-réseaux et une indication qu'une opération de fusion est instanciée.

Avantageusement, chaque nœud recevant le message de gèle fige :
- toute autre analyse quant à des messages reçus de nœuds inconnus ;
- toute assignation d'adresse IP d'un nouveau nœud du réseau ;
- toute autre demande de fusion provenant d'un autre nœud.

Avantageusement, chaque nœud recevant le message de gèle enregistre les identifiants des deux sous-réseaux et active un état d'attente vis-à-vis de la situation de fusion jusqu'à ce qu'elle reçoive un message indiquant que la phase de fusion est terminée.

Avantageusement, la taille d'un sous-réseau correspond au nombre de nœuds connus dans l'ensemble de données d'authentification d'un nœud dudit sous-réseau.

Avantageusement, le nœud esclave est le nœud appartenant au sous- réseau de plus petite taille.

Avantageusement, lorsque les tailles des deux sous-réseaux sont identiques, le nœud esclave est choisi parmi celui qui a l'identifiant de réseau de plus grande valeur.

Avantageusement, l'identifiant de l'unique réseau fusionné correspond à l'identifiant du nœud du sous-réseau ayant la plus grande valeur.

### BREVE DESCRIPTION DES FIGURES

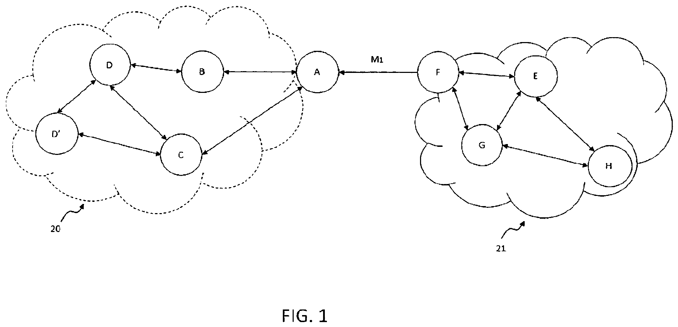

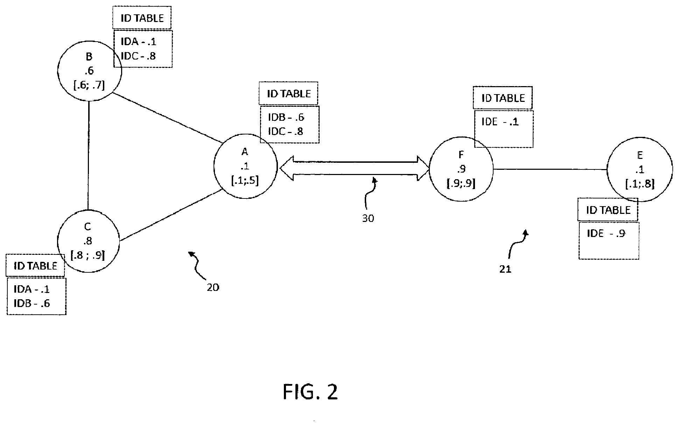

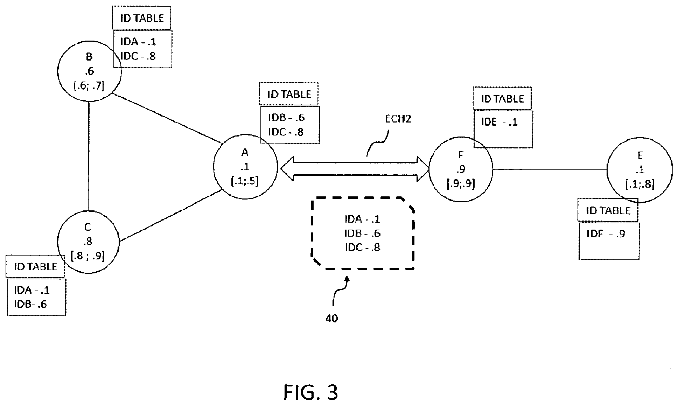

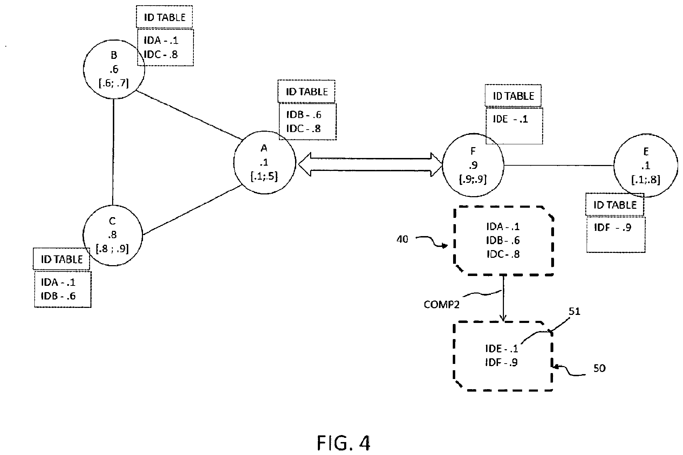

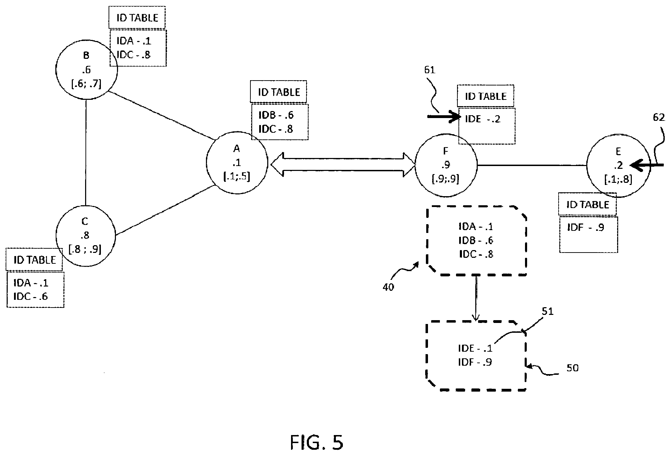

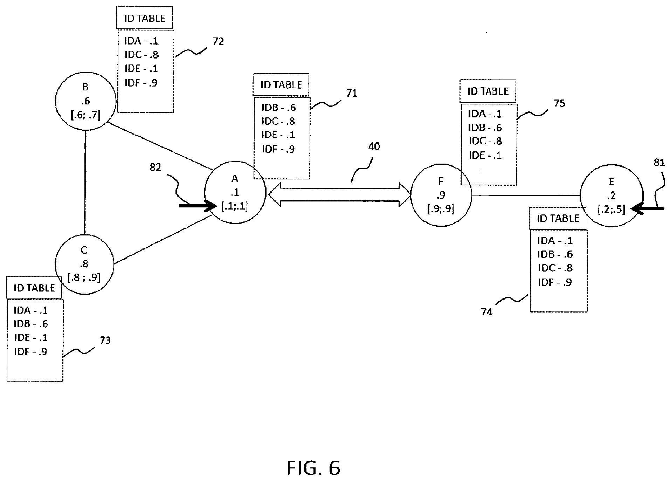

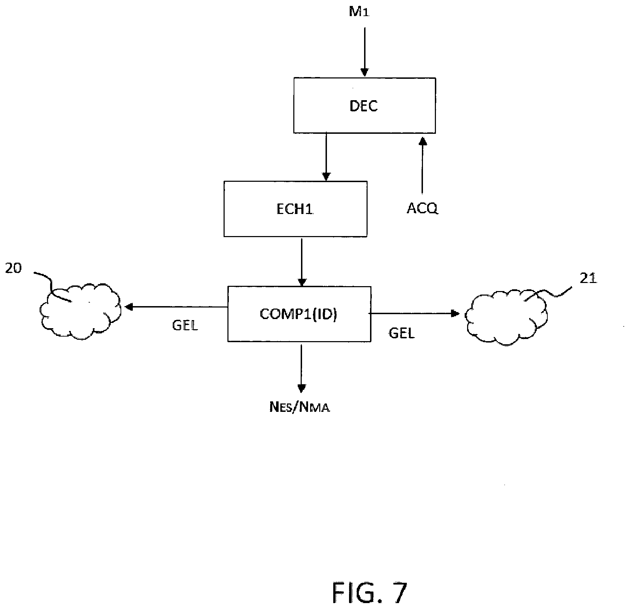

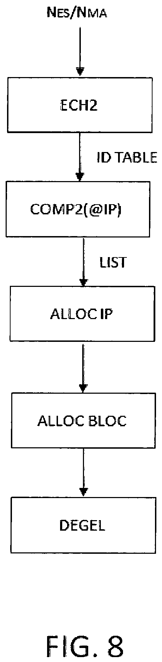

D'autres caractéristiques et avantages de l'invention ressortiront à la lecture de la description détaillée qui suit, en référence aux figures annexées, qui illustrent :
▪ figure 1 : deus sous-réseaux se découvrant et utilisant le procédé de l'invention ;
▪ figure 2 : la première étape de découverte du procédé permettant de déterminer un nœud esclave et un nœud maitre ;
▪ figure 3 : l'étape de transfert des adresses IP et identifiants du sous-réseau du nœud maitre au nœud esclave ;
▪ figure 4 : l'étape de comparaison des doublons d'adresses IP ;
▪ figure 5 : l'allocation des nouvelles adresses IP des nœuds ayant des doublons d'adresses IP ;
▪ figure 6 : la diffusion des nouvelles tables de routage et ID TABLE au sein du réseau fusionné ;
▪ figure 7 : les principales étapes du procédé de détermination des nœuds esclave et maitre ;
▪ figure 8 : les principales étapes du procédé de fusion de deux sous-réseaux.

### DESCRIPTION

La figure 1 illustre deux sous-réseaux 20 et 21 isolés initialement l'un de l'autre. Le premier sous-réseau 20 comprend une pluralité de nœuds A, B, C, D, D'. Le second sous-réseau 21 comporte une pluralité de nœuds E, F, G, H.

Chaque nœud d'un sous-réseau connait les nœuds du même sous-réseau. Un protocole de routage permet la mise à jour d'une table de routage permettant de distribuer et enregistrer les informations des autres nœuds d'un même sous-réseau. Un ensemble de données d'authentification ENS1 peut être stocké dans chaque nœud, cet ensemble est également appelé la table ID TABLE car les données d'authentifications peuvent être stockées sous forme d'une table d'une base de données. Cette dernière peut comprendre la liste des identifiants de chaque nœud connu d'un nœud donné d'un même sous-réseau. La table ID TABLE comprend en outre la liste des adresses IP associées à chaque identifiant de chaque nœud.

La table ID TABLE est mise à jour à chaque découverte d'un nouveau nœud ou lorsque des informations sont modifiées concernant l'authentification d'un nœud, comme par exemple son adresse IP. En outre, la table ID TABLE peut comprendre des certificats d'authentification des nœuds ou toute autre donnée relative à l'authentification des nœuds d'un sous-réseau.

La table ID TABLE peut être mise à jour en fonction des mises à jour de la table de routage, les deux tables pouvant être liées.

En résumé, la table ID TABLE d'un nœud donné contient pour chaque nœud connu de ce nœud du même sous-réseau :
- Son identifiant unique
- Son adresse IP
- Des données d'authentification (optionnelles)

Chaque nœud d'un réseau ad hoc comprend :
- une table de routage pour l'exécution de services permettant d'effectuer le routage des messages ;
- Une table ID TABLE pour l'exécution de services d'authentification entre les communications de nœuds entre eux.

Les deux tables peuvent être utilisées conjointement pour :
- assurer une synchronisation des services et ;
- assurer une mise à jour des données des tables.

Les applications et services effectuant des contrôles d'authentification au sein d'un nœud donné s'appuient principalement sur la table ID TABLE qui comprend les identifiants physique de chaque nœud connu dudit nœud donné.

Sur la figure 1, est illustré le cas où un premier nœud A d'un premier sous réseau 20 découvre un second nœud F d'un second sous réseau 21. La découverte du second nœud F s'effectue par la réception d'un message d'un protocole de routage de type HELLO ou TC lorsque le protocole de routage est le protocole OLSR.

Le premier nœud A recevant un message d'un second nœud F compare l'identifiant ou l'adresse IP du second nœud F qui peut être extraite du message reçu afin de l'authentifier. Le premier nœud A n'ayant ni l'adresse IP ni l'identifiant dans les tables de routage ou l'ID TABLE détecte un nouveau nœud.

A ce stade de la détection, le premier nœud A peut :
- soit conclure qu'un nouveau nœud F accède au réseau et qu'il est nécessaire d'instancier une procédure permettant l'attribution d'une nouvelle adresse IP au second nœud F ;
- soit conclure qu'un nouveau sous-réseau est potentiellement détecté lorsque le nœud découvert possède déjà une adresse IP.

Le procédé de détection d'une situation de fusion de deux sous-réseaux 20, 21 comprend donc dans un premier temps :
- la réception d'un message M₁ d'un protocole de routage par un nœud quelconque, dit « nœud découvrant » qui est représenté sur la figure par le premier nœud A, d'un sous-réseau donné ;
- l'extraction par ce premier nœud A de l'identifiant de l'émetteur du message M₁ qui est le second nœud F puis le contrôle que l'identifiant IDF du second nœud F est un nouvel identifiant, on l'appelle : « nœud de découverte », il est représenté sur la figure 2 par le second nœud F ;
- le contrôle de la présence d'une adresse IP associée au nouvel identifiant IDF du second nœud F dans les données reçues par le premier nœud A.

La figure 2 représente un schéma détaillé de certains nœuds de deux sous-réseaux 20, 21. Pour la compréhension de l'invention et la clarté de la description, le premier sous-réseau 20 est représenté avec uniquement trois nœuds A, B, C, et le second sous-réseau est représenté avec uniquement deux nœuds E, F.

Sur la figure 2, les tables ID TABLE de chaque nœud sont représentées. La table ID TABLE d'un nœud donné comprend l'identifiant et l'adresse IP de chaque nœud connu du même sous-réseau.

Chaque nœud comprend une adresse IP et un bloc d'adresses IP définissant une plage comprenant l'adresse du nœud en question et une liste d'adresses IP libres (adresses IP libres suivant l'adresse IP du nœud jusqu'à l'adresse IP non libre, affectée à un autre nœud). Les blocs d'adresses sont utilisés dans les réseaux ad hoc pour l'attribution dynamique d'une nouvelle adresse IP à un nœud se connectant au réseau. En général, le nœud qui répond le plus vite à une requête d'adresse d'un nouvel arrivant, alloue au nouvel arrivant d'une part une adresse IP de son bloc et d'autre part un demi-bloc d'adresses IP (le bloc d'adresses supérieures à l'adresse IP fournie). L'attribution d'un demi-bloc d'adresses IP permet :
- au nouvel arrivant d'obtenir une liste d'adresses IP disponibles si un autre nouvel arrivant venait à être raccordé au sous-réseau par la suite ;
- au nœud découvrant de garder un demi-bloc d'adresses IP disponibles de sorte à permettre d'autres futures attributions d'adresse IP à de nouveaux arrivants.

Les identifiants, adresses IP et blocs d'adresses IP des nœuds du premier sous-réseau sont (à titre d'exemple - NB : seul le dernier digit des adresses IP est représenté) :
∘ Nœud A : IDA, @IP = .1, bloc(@IP) = [.1 ; .5] ;
∘ Nœud B : IDB, @IP = .6, bloc(@IP) = [.6 ; .7] ;
∘ Nœud C : IDC, @IP = .8, bloc(@IP) = [.8 ; .9].

Par commodité, les adresses et blocs d'adresses sont simplifiées dans la présente description.

Les identifiants, adresses IP et blocs d'adresses IP des nœuds du second sous-réseau sont (à titre d'exemple - NB : seul le dernier digit des adresses IP est représenté) :
∘ Nœud E : IDE, @IP = .1, bloc(@IP) = [.1 ; .8] ;
∘ Nœud F : IDF, @IP = .9, bloc(@IP) = [.9 ; .9].

Le procédé de détection d'une situation de fusion de deux sous-réseaux 20, 21 d'un réseau ad hoc de l'invention comprend différentes étapes représentées sur la figure 7 dont :
∘ une étape de découverte, notée DEC :
∘ une étape d'échanges de données, notée ECH1 et ;
∘ une étape de comparaison, notée COMP1(ID).

Ces trois étapes sont détaillées dans la suite de la description au travers des figures 2 et 7.

La flèche 30 de la figure 2 comprend le message M₁ de découverte qui correspond au premier message reçu par le premier nœud A provenant du second nœud F. Le premier message M₁ est un message d'un protocole de routage comprenant au moins : l'identifiant du nœud second F et son adresse IP.

En outre, la trame de découverte M₁ peut comprendre un certificat d'authentification permettant la réalisation par le premier nœud A d'un procédé d'authentification permettant de :
- sécuriser les échanges de données entre le nœud F et le nœud A et/ou ;
- authentifier le second nœud F par le premier nœud A.

Par ailleurs, la flèche 30 comprend éventuellement d'autres données pouvant être échangées suite à la réception du message M₁ :
∘ un acquittement, noté ACQ sur la figure 7, du premier nœud A vers le second nœud F ou ;
∘ des échanges de données ECH1 correspondant à une seconde étape du procédé de l'invention.

Lorsque le premier nœud A détecte un nouvel identifiant IDF et la présence d'une adresse IP_{F} du second nœud F pour la première fois, une situation de fusion de deux sous-réseaux est détectée.

Dans ce cas, le premier nœud A peut également répondre au second nœud F en générant un message d'acquittement ACQ informant le second nœud F qu'une découverte a eu lieu. Le second nœud F prend donc également connaissance qu'une situation de fusion est à envisager. Ce message d'acquittement ACQ de retour permet au second nœud F de détecter à son tour un nouveau sous-réseau 20 et d'identifier une situation de fusion.

Le premier nœud A et le second nœud F peuvent procéder dans leur propre sous-réseau à une vérification de non-concurrence de la fusion : chacun des deux nœuds envoie dans leur propre sous-réseau une demande d'autorisation d'initialisation de la fusion et attend la réponse des nœuds connus du sous-réseau. Si un des nœuds connus du sous-réseau répond négativement à la demande d'autorisation d'initialisation de la fusion, la fusion peut être interrompue dans les deux sous-réseaux. Si aucune réponse négative ne parvient d'un des nœuds connus des sous-réseaux en un laps de temps donné, la fusion peut continuer.

Le premier nœud A et le second nœud F procèdent alors à une seconde étape correspondant à une étape d'échange de données ECH1, dites données d'initialisation de la fusion ou plus simplement données d'initialisation. L'échange de données d'initialisation comprend la taille de chaque sous-réseau, c'est-à-dire le nombre de nœuds « p » connus par le premier nœud A dans le premier sous-réseau 20 et respectivement le nombre « q » de nœuds connus par le second nœud F dans le second sous réseau 21.

En outre, l'échange de données d'initialisation ECH1 comprend l'identifiant ID₂₀ et ID₂₁ de chaque sous-réseau 20, 21.

Selon les modes de réalisations, les échanges d'identifiants des sous-réseaux 20, 21 peuvent avoir lieu :
- dans la première étape, c'est-à-dire lors de la transmission du message de découverte M₁ et/ou lors d'échanges d'acquittement ACQ si le protocole de routage intègre ce service ;
- dans la seconde étape ECH1 lors des échanges de données d'initialisation entre le premier nœud A et le second nœud F, ce cas est celui qui est décrit dans le mode de réalisation de l'invention.

Si le premier nœud A n'a pas acquitté la trame de découverte M₁, alors l'échange de données ECH1 peut comprendre les identifiants des premier et/ou second nœuds, respectivement A, F. Le cas où aucun n'acquittement n'est envoyé du premier nœud A vers le second nœud F, correspond au cas où l'étape d'échange de données ECH1 est instanciée directement par le premier nœud A lorsque l'étape de découverte DEC du second nœud F a eu lieu.

Si le premier nœud A acquitte le message M₁, il peut à son tour indiquer au second nœud F qu'une fusion est détectée, par exemple, une variable indiquant une fusion peut être générée dans le message d'acquittement.

Une première étape de comparaison COMP1(ID) des tailles p, q de chaque sous-réseau 20, 21 permet de déterminer un nœud esclave, noté N_{ES}, et un nœud maitre, noté N_{MA}, parmi le premier nœud A et le second nœud F.

Un exemple d'implémentation permet de définir une règle permettant d'élire le nœud maitre N_{MA} et le nœud esclave N_{ES}.

Le sous-réseau de plus petite taille dans le cas de la figure 2 est le second sous-réseau 21 car il possède moins de nœuds que le premier sous-réseau 20, on a : q = 2 < p = 3. La détermination du sous-réseau de plus petite taille permet de définir le nœud esclave comme étant le second nœud F.

Dans la suite de la description on appelle indifféremment le premier nœud A : le « nœud A », le « premier nœud maitre A » ou le « nœud maitre A » ou le « nœud N_{MA} ». Identiquement, le second nœud F est indifféremment appelé le « nœud F », le « second nœud esclave F » ou le « nœud esclave F » ou le « nœud N_{ES} » selon le contexte.

La taille d'un sous-réseau correspond à la taille de la table ID TABLE d'un nœud donné dudit sous-réseau puisque la table comporte autant d'entrées que de nœuds connus de ce nœud donné. Dans le cas de la figure 2, le nœud esclave est le second nœud F, c'est-à-dire le nœud initialement découvert par le premier nœud A. Le nœud maitre N_{MA} correspond alors au nœud appartenant au sous-réseau de plus grande taille, dans l'exemple de la figure 2, il s'agit du premier sous-réseau 20.

On a N_{MA} = A et N_{ES} = F.

L'invention s'applique de la même manière si le nœud découvert en premier devenait le nœud maitre en raison d'une table ID TABLE plus grande que le nœud découvrant.

Dans la présente description, un seul cas est décrit et correspond au cas où le premier nœud A découvre en premier le second nœud F, le nœud A comportant plus d'entrées dans la table ID TABLE que le second nœud F.

Un avantage est de définir une séquence permettant d'engager une fusion pas à pas de deux sous réseaux 20, 21 par la définition d'un couple maitre/esclave N_{MA}/N_{ES} et des rôles distincts de chacun des deux nœuds du couple.

Cette élection d'un nœud maitre N_{MA} et d'un nœud esclave N_{ES} permet de coordonner les échanges de données dans les deux sous-réseaux 20, 21 et d'éviter des situations de conflits dans la procédure de fusion desdits sous-réseaux 20, 21.

Lorsque les tailles des deux sous-réseaux 20, 21 sont identiques, c'est-à-dire qu'on a l'égalité suivante p = q, alors une seconde règle peut être appliquée. La seconde règle peut être par exemple : le sous-réseau ayant un identifiant de plus grande valeur parmi les deux sous-réseaux se découvrant, détermine le nœud maitre N_{MA}. Les identifiants des réseaux sont définis de telle sorte à représenter une valeur numérique. On compare donc ID₂₀ < / > ID₂₁.

Le nœud esclave N_{ES} est par conséquent le nœud ayant l'identifiant de plus petite valeur.

Lorsque le nœud maitre N_{MA} et le nœud esclave N_{ES} sont déterminés par le procédé de détection d'une situation de fusion de l'invention, certaines opérations sont interdites au sein des deux sous-réseaux pendant l'exécution du procédé de fusion de l'invention.

Par exemple, dans un mode de réalisation, le nœud maitre N_{MA} interdit toute nouvelle allocation d'adresse IP à un nœud se déclarant dans un des sous-réseaux 20 ou 21 tant que la fusion n'est pas terminée.

Cette étape permet d'assurer que le déroulement de la fusion des deux sous-réseaux 20, 21 n'est pas altérée par l'attribution de nouvelles adresses IP à un nœud de l'un des deux sous-réseaux. Cette situation pourrait provoquer des conflits de doublons d'adresses IP.

Le nœud maitre N_{MA} (respectivement le nœud N_{ES}) envoie à tous les nœuds du sous-réseau 20 (respectivement à tous les nœuds du réseau 21) un message, dit « de gel », noté GEL. Sur la figure 7, le message est envoyé d'une part aux nœuds B et C du sous-réseau 20 et au nœud E du sous-réseau 21.

Le message GEL est envoyé dans les deux sous-réseaux 20, 21 dès que le nœud maitre N_{MA} et le nœud esclave N_{ES} sont identifiés par le procédé de détection d'une situation de fusion de l'invention.

Le message GEL comprend les deux identifiants ID₂₀, ID₂₁ des deux sous-réseaux 20, 21 et un indicateur indiquant qu'une fusion est en cours.

Le message de GEL permet d'indiquer à chaque nœud qu'une fusion est engagée et que certaines opérations sont bloquées telles que :
- l'opération consistant en une allocation d'une adresse IP à un nouveau nœud se déclarant dans l'un des deux sous-réseaux ;
- l'opération consistant à initier une nouvelle fusion avec un autre sous-réseau.

De ce fait, toute nouvelle demande de fusion d'un autre nœud est alors gelée. En effet, ceci peut se produire lorsque deux sous-réseaux se découvrent, plusieurs nœuds peuvent concourir à la découverte des nœuds de l'autre sous-réseau.

Lorsqu'un nœud reçoit un message GEL, il enregistre les identifiants ID₂₀, ID₂₁ des deux sous-réseaux 20, 21 et entre dans un mode d'attente. Le mode d'attente permet au nœud d'un sous-réseau de rester à l'écoute d'autres messages permettant de réaliser le déploiement de la fusion des deux sous-réseaux 20, 21.

La sortie du mode d'attente peut se faire de deux manières :
- soit à l'échéance d'un minuteur déclenché jusqu'à la réception d'un autre message permettant de continuer la procédure de fusion (message de dégel) ;
- soit un message dit de dégel, noté DEGEL, est reçu et indique que la fusion est terminée ou abandonnée.

Selon un autre mode de réalisation, le message GEL peut être envoyé dès que l'étape de découverte DEC est réalisée, c'est-à-dire dès qu'un nœud a une connaissance qu'un sous-réseau est présent et qu'une opération de fusion va être engagée. Ce cas ne permet pas d'envoyer les deux identifiants ID₂₀, ID₂₁ des deux sous-réseaux 20, 21 à chaque nœud. Ce cas de figure nécessiterait d'implémenter un traitement particulier du nœud F qui a envoyé un message de découverte et qui recevrait en retour un message GEL comportant les deux identifiants ID₂₀, ID₂₁. Cependant, ce cas reste une possible implémentation du procédé de l'invention selon un mode de réalisation.

Dans la présente description, le message GEL est envoyé par le noeud maitre N_{MA}, c'est-à-dire le premier nœud A, et le nœud esclave N_{ES}, c'est-à-dire le second nœud F, dès que la comparaison COMP1(ID) des tailles p, q des sous-réseaux 20, 21 a été effectuée comme représenté à la figure 7.

En conséquence, préférentiellement pendant le procédé de fusion de l'invention, aucun message de routage, de type HELLO ou TC lorsque le protocole OLSR est mis en œuvre, provenant d'un potentiel autre sous-réseau n'est accepté par les nœuds du premier et du second sous-réseau 20 et 21.

Lorsque le second nœud esclave F et le premier nœud maitre A sont déterminés, un procédé de fusion permet de réaliser la fusion des deux sous-réseaux 20, 21 en un unique réseau ad hoc.

La figure 8 permet de représenter les différentes étapes du procédé de fusion de l'invention. Le procédé de fusion de deux sous-réseaux est engagée lorsque qu'un nœud esclave N_{ES} et un nœud maitre N_{MA} sont identifiés de part et d'autre de chacun des deux sous-réseaux 20 et 21. La première étape est notée ECH2 comprend un second «échange de données » entre le premier nœud A maitre et le second nœud esclave F.

En outre, la figure 3 permet d'illustrer la première étape ECH2 de ce procédé de fusion sur la même architecture que la figure 2.

La première étape ECH2 comprend l'envoi 40 par le premier nœud A (le nœud maitre) des données d'identifiants ID et d'adresses IP des nœuds A, B et C du premier sous-réseau 20. Les informations de la table ID TABLE du premier nœud maitre A peuvent être envoyées de sorte à ce que le second nœud esclave F reçoive une table comportant toutes les adresses IP associées aux identifiants ID des nœuds du sous-réseau 20 du premier nœud maitre A. On note la table ID TABLE du nœud A : ID TABLE(A). La même notation est utilisée pour les autres tables comportant les données d'authentification des autres nœuds. La table du second nœud esclave F est notée ID TABLE (F)

Une étape de comparaison, notée COMP2(@IP) sur la figure 8, du procédé de fusion est réalisée par le second nœud esclave F. La comparaison permet de comparer d'une part chaque adresse IP comprise dans un premier ensemble de données ENS1 également considéré comme la table ID TABLE(A) reçue par le second nœud esclave F avec chaque adresse IP comprise dans un second ensemble de données ENS2 également considéré comme la table ID TABLE(F) contenue dans le second nœud esclave F.

Cette comparaison est nécessairement réalisée par le nœud esclave F puisque c'est le second nœud esclave F qui possède les deux tables après l'envoi de la table ID TABLE(A) par le premier nœud A.

La figure 4 représente cette étape de comparaison par la comparaison des données envoyées de l'ID TABLE (A) 40 et des données 50 de l'ID TABLE(F).

Le procédé de fusion de l'invention permet de détecter le ou les adresse(s) IP doublon(s), telle que l'adresse IP, notée 51, ayant pour valeur « .1 » du nœud E du second sous-réseau 21 qui est identique à celle du nœud A du sous-réseau 20. Les doublons d'adresses IP sont stockés dans une liste de doublons, notée LIST, qui est établie après l'opération de comparaison COMP2(@IP).

On nomme un nœud du second sous-réseau 21 un « nœud doublon » lorsque son adresse IP est identique à une adresse IP d'un nœud du premier sous réseau 20.

Lorsque les doublons ont été identifiés par le second nœud esclave F dans le second sous-réseau 21, une étape d'allocation ALLOC IP de nouvelles adresses IP est engagée.

La figure 5 illustre l'étape d'allocation ALLOC IP de nouvelles adresses IP aux nœuds doublons. En l'occurrence, dans l'exemple de la figure 5, un seul nœud doublon E est détecté suite à l'étape de comparaison COMP2(@IP). En effet, la valeur de l'adresse IP du nœud E est de « .1 » et est identique à la valeur du nœud A du premier sous-réseau 20.

Le second nœud esclave F envoie un message aux nœuds doublons, c'est-à-dire dans l'exemple de la figure 5 au nœud E du sous-réseau 21 de manière à forcer le changement d'adresse IP du nœud doublon E. Une nouvelle adresse « .2 » est attribuée au nœud E. Elle est choisie parmi les adresses IP libres connues du nœud esclave. En outre, le bloc d'adresses du nœud A du premier sous réseau 20 peut être pris en compte de manière à garantir que la nouvelle adresse libre attribuée .2 est bien libre dans les deux sous-réseaux.

Le nœud esclave peut enclencher un minuteur de sorte à attendre un acquittement du nœud doublon E. Si l'acquittement n'est pas reçu à la fin du minuteur, un message d'allocation peut être réémis vers le nœud doublon jusqu'à ce qu'un acquittement soit généré vers le second nœud esclave F. Si aucun n'acquittement n'est reçu par le second nœud esclave F après N tentatives, alors le nœud doublon E est considéré comme étant déconnecté et la procédure d'allocation est terminée. Cette étape est répétée pour tous les nœuds doublons lorsque plusieurs nœuds doublons ont été détectés par l'étape de comparaison COMP(@IP) du procédé de fusion.

Lorsque le second nœud esclave F est un nœud doublon, la procédure d'allocation d'une nouvelle adresse IP lui est appliquée.

Dans un mode de réalisation, un second message est envoyé aux autres nœuds du sous-réseau 21 de manière à ce que tous les nœuds prennent en compte la nouvelle adresse IP du nœud doublon E. Ainsi chaque nœud peut modifier l'adresse IP du nœud E dans sa table de routage et dans sa table de données d'identification ID TABLE.

Ainsi dans l'exemple de la figure 5, on note l'attribution de la nouvelle adresse IP référencée 62 sur la figure 5: @IP(E) = .2 et la modification dans l'ID TABLE(F) de cette adresse IP par une référence 61.

Une étape de calcul des blocs d'adresses IP, notée ALLOC BLOC, des nœuds doublons du second sous réseau 21 est engagée conjointement ou successivement à l'étape d'allocation de la nouvelle adresse IP des nœuds doublons.

Dans le cas de la figure 6, le second noeud esclave (F) calcule et transmet au nœud E ayant changé d'adresse IP un nouveau bloc 81 (dans l'exemple, le bloc est issu du premier bloc en le tronquant). Le premier bloc [.1 ; .5] devient alors le second bloc [.2 ; .5] du nœud E.

Dans un premier mode de réalisation, le second nœud esclave F calcule et transfère au premier nœud maitre A : le bloc qui doit être attribué au nœud (j) du premier sous-réseau 20 qui porte l'adresse qui était en doublon avec celle du nœud E de sorte que le nœud maître A transmette au nœud (j) ce nouveau bloc. En outre, si (i) est le nœud dont le bloc d'adresse IP libre comporte l'adresse IP que le nœud esclave F a choisi pour le nœud doublon E, le nœud esclave F calcule et transfère au nœud (i) son bloc d'adresse IP libre.

Dans un second mode de réalisation, les données mises à jour d'adresses IP et de nouveau blocs peuvent être transmises avec un message de DEGEL comme décrit ci-après à l'étape de DEGEL.

Le même fonctionnement s'applique si l'adresse IP en doublon concerne un autre nœud que le premier nœud maitre A du premier sous-réseau 20. Le premier nœud maitre A peut alors effectuer l'attribution d'un nouveau bloc 82 dans le premier sous-réseau 20 au nœud ayant une adresse IP en doublon avec un nœud doublon du second sous-réseau 21.

Le bloc initial [.1 ; .5] du premier nœud A est recalculé après l'identification des doublons des deux sous-réseaux 20, 21, le second bloc ainsi calculé est [.1 ; .1].

La génération d'un bloc complémentaire permet d'éviter que des valeurs d'adresses IP libres soient communes entre le nœud E et le nœud A. Cela compromettrait alors le fonctionnement du réseau fusionné.

Un acquittement est envoyé de chaque nœud doublon effectuant un changement d'adresses IP vers le second nœud esclave F.

Le second nœud esclave F peut envoyer à son tour un message vers le premier nœud maitre A lorsqu'une adresse IP et un nouveau bloc ont été attribués à un nœud doublon du second sous-réseau 21.

Une étape de dégel, notée DEGEL sur la figure 8, est engagée par le second nœud esclave F lorsque tous les conflits d'adresses ont été résolus.

Le DEGEL comprend la diffusion d'un message à tous les nœuds deux sous réseaux 20, 21 indiquant que l'étape de GEL est terminée, ce message comprend l'identifiant du second nœud esclave. En outre, un nouvel identifiant réseau ID₂₂ est diffusé à tous les nœuds des deux sous réseaux 20, 21.

A ce stade, dans un mode de réalisation, le message DEGEL peut comprendre les nouvelles adresses IP attribuées ainsi que les nouveaux blocs qui ont été calculés lorsque cette étape n'a pas été encore réalisée.

Les nœuds du premier sous réseau 20 recevant le message DEGEL peuvent :
- mettre à jour les nouvelles adresses IP attribuées aux nœuds doublons du second sous-réseau 21,
- calculer les nouveaux blocs complémentaires et ;
- associer aux adresses IP les identifiants.

Dans un autre mode de réalisation, les nouvelles adresses IP et la répartition des blocs entre nœuds sont automatiquement connues des nœuds du réseau par le biais du protocole de routage et du protocole de distribution des adresses IP dans le réseau après le dégel des sous-réseaux.

Le message DEGEL peut comprendre un minuteur permettant la prise en compte des nouvelles données du protocole OLSR à savoir les nouveaux identifiants et la découverte des nouveaux nœuds dans le réseau fusionné.

Le minuteur peut être enclenché au sein de chaque nœud du nouveau réseau fusionné de manière à attendre que chaque nœud prenne en compte la nouvelle topologie du réseau. Ainsi aucune nouvelle découverte d'un autre sous-réseau, ou d'attribution d'une nouvelle adresse IP d'un nouveau nœud n'est effectuée jusqu'à la fin d'un temps imparti permettant d'achever le procédé de fusion.

Selon un mode de réalisation, le nouvel identifiant réseau ID₂₂ est calculé de la manière suivante : une comparaison est réalisée entre l'identifiant ID₂₀ du premier sous-réseau et l'identifiant ID₂₁ du second sous-réseau. Le plus grand identifiant des deux identifiants est choisi comme l'identifiant du réseau fusionné, on a : MAX(ID₂₀, ID₂₁) = ID₂₂.

Chaque nœud est en mesure de calculer le nouvel identifiant du réseau fusionné ou de vérifier que l'identifiant du réseau fusionné reçu est le bon. Dans un mode de réalisation, comme décrit précédemment, c'est le nœud esclave qui indique le nouvel identifiant du réseau fusionné aux nœuds du réseau.

Chaque nœud du réseau fusionné calcule sa table de routage ainsi que la table comprenant ses données d'authentification ID TABLE.

Un avantage du procédé de détection d'une situation de fusion et du procédé de fusion de l'invention est d'assurer une fusion de sous-réseaux ad hoc selon une séquence qui permet d'éviter tout conflit d'adresses IP.

En outre l'invention concerne un système selon la revendication permettant la mise en œuvre des procédés de l'invention comme définit dans les revendications 1-9. Le système comprend une pluralité de nœuds d'un réseau, tels que des mobiles. Les nœuds comportent au moins une mémoire pour le stockage des tables de routage des données d'authentification. En outre, chaque nœud comprend des moyens de calculs pour effectuer les opérations définies dans les étapes du procédé de détection d'une situation de fusion et les étapes du procédé de fusion de l'invention.

## Revendications

1. Procédé de détection d'une situation de fusion de deux sous-réseaux (20, 21) ad hoc implémentant le protocole d'adressage D2HCP, le premier sous-réseau (20) comportant une pluralité (p) de nœuds (A, B, C) et le second sous-réseau (21) comportant une pluralité (q) de nœuds (E, F), chaque nœud (i) de chaque sous-réseau comportant un ensemble de données comportant :
• un identifiant dudit nœud (IDi);
• des identifiants des nœuds connus (IDj) d'un ensemble de données d'authentification dudit nœud (Ni) ;
• l' adresse IP associée à l'identifiant (IDj) de chaque nœud (Nj) référencé dans l'ensemble de données d'authentification ;
• au moins un identifiant (ID₂₀, ID₂₁) du sous-réseau auquel appartient ledit nœud (Ni),
le procédé comportant :
• une découverte (DEC) d'un second nœud (F) du second sous-réseaux (21) par un premier nœud (A) du premier sous-réseau (20), par la réception par le premier nœud (A) d'une trame de données, dite de découverte, émise par le second nœud (F) permettant de déterminer une situation nécessitant une fusion des deux sous-réseaux (20, 21);
• un échange de données (ECH1), dites données d'initialisation, entre le premier nœud (A) et le second nœud (F), comportant :
∘ les identifiants de chaque nœud (IDA, IDF)
∘ la taille de chaque sous-réseau (p, q)
∘ l'identifiant de chaque sous-réseau (ID₂₀, ID₂₁) ;
• une comparaison (COMP) des tailles (p, q) de chaque sous-réseaux (20, 21) et une définition d'un nœud maitre (N_{MA}) et d'un nœud esclave (N_{ES}) parmi le premier (A) et le second nœud (F) sur la base de la comparaison (COMP) des tailles (p, q) de chaque sous-réseaux (20,21) et d' une règle, le nœud esclave (N_{ES}) récupérant un ensemble d'identifiants des nœuds du sous-réseau du nœud maitre (N_{MA}) ainsi que les adresses IP associés à chacun desdits identifiants, la détermination du nœud esclave (NES) et du nœud maitre (N_{MA}) permettant d'initialiser une fusion des deux sous-réseaux en un unique réseau.

2. Procédé selon la revendication 1, **caractérisé en ce que** :
▪ l'ensemble de données d'authentification est une table (ID TABLE) comprenant des identifiants de nœuds (IDi) et leurs adresses IP associées (IPi) ;
▪ les données d'initialisation comportent en outre une indication d'une situation de fusion est engagée, appelée variable de fusion.

3. Procédé selon l'une quelconque des revendications 1 à 2, **caractérisé en ce qu'**une situation de fusion nécessitant une fusion des deux sous-réseaux (20, 21) est reconnue par :
▪ un premier nœud (A) lorsqu'une trame de découverte (M₁) d'un protocole de routage est reçue en provenance du second nœud (F) et comporte un identifiant (IDF) inconnu du premier nœud (A) et que le second nœud (F) a déjà une adresse IP (IP_{F}) et/ou ;
▪ un second nœud (F) lorsqu'il reçoit, d'un premier nœud (A) l'ayant préalablement découvert, une variable indiquant qu'une situation de fusion a été reconnue par le premier nœud (A).

4. Procédé selon l'une quelconque des revendications 1 à 3, **caractérisé en ce que** :
▪ une génération d'un message (GEL), dit message de gel, par le nœud maitre (N_{MA}) à tous les nœuds connus de son ensemble de données d'authentification (ID TABLE(N_{MA})) y compris au nœud esclave (F) est un message comprenant les identifiants (ID₂₀, ID₂₁) des deux sous-réseaux (20, 21) et une indication qu'une opération de fusion est instanciée ;
▪ une génération d'un message (GEL), dit message de gel, par le nœud esclave (N_{ES}) à tous les nœuds connus de son ensemble de données d'authentification (ID TABLE(N_{ES})) est un message comprenant les identifiants (ID₂₀, ID₂₁) des deux sous-réseaux (20, 21) et une indication qu'une opération de fusion est instanciée.

5. Procédé selon la revendication 4, **caractérisé en ce que** :
• chaque nœud recevant le message de gel (GEL) fige :
∘ toute autre analyse quant à des messages reçus de nœuds inconnus ;
∘ toute assignation d'adresse IP d'un nouveau nœud entrant dans un sous-réseau ;
∘ toute autre demande de fusion provenant d'un autre nœud,
• chaque nœud recevant le message de gel (GEL) enregistre :
∘ les identifiants (ID₂₀, ID₂₁) des deux sous-réseaux (20, 21) et active un état d'attente vis-à-vis de la situation de fusion jusqu'à ce qu'elle reçoive un message (DEGEL) indiquant que la phase de fusion est terminée.

6. Procédé selon l'une quelconque des revendications 1 à 5, **caractérisé en ce que** la taille (p, q) d'un sous-réseau (20, 21) correspond au nombre de nœuds (i) connus dans l'ensemble de données d'authentification (ID TABLE(i)) d'un nœud (i) dudit sous-réseau (20, 21).

7. Procédé selon l'une quelconque des revendications 1 à 6, **caractérisé en ce que** la règle définit que le nœud esclave (F) est le nœud appartenant au sous- réseau (21) de plus petite taille (q).

8. Procédé selon l'une quelconque des revendications 1 à 6, **caractérisé en ce que** la règle définit que lorsque les tailles (p, q) des deux sous-réseaux (20, 21) sont identiques, le nœud esclave (N_{ES}) est choisi parmi celui qui a l'identifiant de réseau (ID₂₀, ID₂₁) de plus grande valeur.

9. Procédé selon la revendication 1, **caractérisé en ce que** l'identifiant de l'unique réseau fusionné correspond à l'identifiant (ID₂₀, ID₂₁) du nœud du sous-réseau (20, 21) ayant la plus grande valeur.

10. Système de détection d'une situation de fusion de deux sous-réseaux (20, 21) ad hoc implémentant le protocole d'adressage D2HCP, le premier sous-réseau (20) comportant une pluralité (p) de nœuds (A, B, C) et le second sous-réseau (21) comportant une pluralité (q) de nœuds (E, F), **caractérisé en ce qu'**au moins un premier nœud du premier sous réseau et un nœud du second sous réseaux sont configurés pour mettre en œuvre le procédé de détection d'une situation de fusion de l'une quelconque des revendications 1 à 9.

## Patentansprüche

1. Detektionsverfahren einer Fusionssituation von zwei Teilnetzen (20, 21), die ad hoc das Adressierungsprotokoll D2HCP implementieren, wobei das erste Teilnetz (20) eine Vielzahl (p) von Knoten (A, B, C) umfasst und das zweite Teilnetz (21) eine Vielzahl (q) von Netzen (E, F) umfasst, wobei jeder Knoten (i) jedes Teilnetzes eine Datengruppe umfasst, umfassend:
• eine Kennung des genannten Knotens (IDi);
• Kennungen der bekannten Knoten (IDj) einer Gruppe von Authentifizierungsdaten des genannten Knotens (Ni);
• die IP-Adresse, die der Kennung (IDj) jedes Knotens (Nj) zugeordnet ist, der in der Gruppe von Authentifizierungsdaten referenziert ist;
• wenigstens eine Kennung (ID₂₀, ID₂₁) des Teilnetzes, zu dem der genannte Knoten (Ni) gehört,
wobei das Verfahren umfasst:
• ein Entdecken (DEC) eines zweiten Knotens (F) des zweiten Teilnetzes (21) durch einen ersten Knoten (A) des ersten Teilnetzes (20) durch den Empfang eines Datenrahmens durch den ersten Knoten, bezeichnet als Entdeckung, die von dem zweiten Knoten (F) ausgegeben wirs, was das Bestimmen einer Situation zulässt, die eine Fusion der zwei Teilnetze (20, 21) benötigt;
• einen Datenaustausch (ECH1), bezeichnet als Initialisierungsdaten, zwischen dem ersten Knoten (A) und dem zweiten Knoten (F), umfassend:
∘ die Kennungen jedes Knotens (IDA, IDF)
∘ die Größe jedes Teilnetzes (p, q)
∘ die Kennung jedes Teilnetzes (ID₂₀, ID₂₁);
• einen Vergleich (COMP) der Größen (p, q) jedes Teilnetzes (20, 21) und eine Definition eines übergeordneten Knotens (N_{MA}) und eines untergeordneten Knotens (N_{ES}) aus dem ersten (A) und dem zweiten Knoten (F) basierend auf dem Vergleich (COMP) der Größen (p, q) jedes Teilnetzes (20, 21) und einer Regel, wobei der untergeordnete Knoten (N_{ES}) eine Kennungsgruppe der Knoten des Teilnetzes des übergeordneten Knotens (N_{MA}) sowie die IP-Adressen wiedergewinnt, die jeder der genannten Kennungen zugeordnet sind, wobei die Bestimmung des untergeordneten Knotens (N_{ES}) und des übergeordneten Knotens (N_{MA}) das Initialisieren einer Fusion der zwei Teilnetze eines einzelnen Netzes zulässt.

2. Verfahren gemäß Anspruch 1, **dadurch gekennzeichnet, dass**:
• die Gruppe von Authentifizierungsdaten eine Tabelle (ID TABLE) ist, die Knotenkennungen (IDi) und deren zugeordnete IP-Adressen (IPi) umfasst;
• die Nutzungsdaten, die darüber hinaus eine Angabe umfassen, dass die Fusion begonnen wurde, die als Fusionsvariable bezeichnet wird.

3. Verfahren gemäß irgendeinem der Ansprüche 1 bis 2, **dadurch gekennzeichnet, dass** eine Fusionssituation, die eine Fusion der zwei Teilnetze (20, 21) benötigt, erkannt wird durch:
• einen ersten Knoten (A), wenn ein Entdeckungsrahmen (M₁) eines Routingprotokolls empfangen wird, der aus dem zweiten Knoten (F) stammt und eine Kennung (IDF) umfasst, die dem ersten Knoten (A) unbekannt ist und der zweite Knoten (F) bereits eine IP-Adresse (IP_{F}) aufweist und / oder;
• einen zweiten Knoten (F), wenn er von einem ersten Knoten (A), der zuvor entdeckt wurde, eine Variable empfängt, die angibt, dass vom ersten Knoten (A) eine Fusionssituation erkannt wurde.

4. Verfahren gemäß irgendeinem der Ansprüche 1 bis 3, **dadurch gekennzeichnet, dass**:
• ein Erzeugen einer Nachricht (GEL), bezeichnet als Einfriernachricht, durch den übergeordneten Knoten (N_{MA}) an alle bekannten Knoten seiner Gruppe von Authentifizierungsdaten (ID TABLE (N_{MA})), unter Einschluss an den untergeordneten Knoten (F) eine Nachricht ist, die die Kennungen (ID₂₀, ID₂₁) der zwei Teilnetze (20, 21) und eine Angabe umfasst, dass eine Fusionsoperation instantiiert ist;
• ein Erzeugen einer Nachricht (GEL), bezeichnet als Einfriernachricht, durch den ungeordneten Knoten (N_{ES}) an alle bekannten Knoten seiner Gruppe von Authentifizierungsdaten (ID TABLE (N_{ES})) eine Nachricht ist, die die Kennungen (ID₂₀, ID₂₁) der zwei Teilnetze (20, 21) und eine Angabe umfasst, dass eine Fusionsoperation instantiiert ist.

5. Verfahren gemäß Anspruch 4, **dadurch gekennzeichnet, dass**:
• jeder Knoten, der die Einfriernachricht (GEL) empfängt, einfriert:
∘ jede weitere Analyse hinsichtlich der von unbekannten Knoten empfangenen Nachrichten;
∘ jede Zuordnung von IP-Adressen eines neuen Knotens, der in ein Teilnetz eintritt;
∘ jede weitere Fusionsanfrage, die von einem anderen Knoten stammt,
• jeder Knoten, der die Einfriernachricht (GEL) empfängt, abspeichert:
∘ die Kennungen (ID₂₀, ID₂₁) der zwei Teilnetze (20, 21) und einen Wartezustand gegenüber der Fusionssituation aktiviert, bis sie eine Nachricht (DEGEL) empfängt, die angibt, dass die Fusionsphase beendet ist.

6. Verfahren gemäß irgendeinem der Ansprüche 1 bis 5, **dadurch gekennzeichnet, dass** die Größe (p, a) eines Teilnetzes (20, 21) der Anzahl von Knoten (i) entspricht, die in der Gruppe von Authentifizierungsdaten (ID TABLE (i)) eines Knotens (i) des genannten Teilnetzes (20, 21) bekannt sind.

7. Verfahren gemäß irgendeinem der Ansprüche 1 bis 6, **dadurch gekennzeichnet, dass** die Regel definiert, dass der untergeordnete Knoten (F) der Knoten ist, der zu dem Teilnetz (21) mit der kleinsten Größe (q) gehört.

8. Verfahren gemäß irgendeinem der Ansprüche 1 bis 6, **dadurch gekennzeichnet, dass** die Regel definiert, dass, wenn die Größen (p, q) der zwei Teilnetze (20, 21) identisch sind, der untergeordnete Knoten (N_{ES}) aus dem ausgewählt wird, der die Netzkennung (ID₂₀, ID₂₁) mit dem größten Wert aufweist.

9. Verfahren gemäß Anspruch 1, **dadurch gekennzeichnet, dass** die Kennung des fusionierten Einzelnetzes der Kennung (ID₂₀, ID₂₁) des Knotens des Teilnetzes (20, 21) entspricht, die den größten Wert aufweist.

10. Detektionssystem einer Fusionssituation von zwei Teilnetzen (20, 21), die ad hoc das Adressierungsprotokoll D2HCP implementieren, wobei das erste Teilnetz (20) eine Vielzahl (p) von Knoten (A, B, C) umfasst, und das zweite Teilnetz (21) eine Vielzahl (q) von Knoten (E, F) umfasst, **dadurch gekennzeichnet, dass** wenigstens ein erster Knoten des ersten Teilnetzes und ein Knoten des zweiten Teilnetzes ausgestaltet sind, um das Detektionsverfahren einer Fusionssituation irgendeines der Ansprüche 1 bis 9 umzusetzen.

## Claims

1. Method for detecting a merger situation of two ad hoc sub-networks (20, 21) implementing the D2HCP addressing protocol, the first sub-network (20) comprising a plurality (p) of nodes (A, B, C) and the second sub-network (21) comprising a plurality (q) of nodes (E, F), each node (i) of each sub-network comprising a data set comprising:
• an identifier of said node (IDi);
• identifiers of known nodes (IDj) of an authentication data set of said node (Ni);
• the IP address associated with the identifier (IDj) of each node (Nj) referenced in the authentication data set;
• at least one identifier (ID₂₀, ID₂₁) of the sub-network to which said node (Ni) belongs,
the method comprising:
• a discovery (DEC) of a second node (F) of the second sub-network (21) by a first node (A) of the first sub-network (20), by the receiving by the first node (A) of a data frame, referred to as discovery, issued by the second node (F) making it possible to determine a situation that requires the merger of two sub-networks (20, 21);
• a data exchange (ECH1), referred to as initialisation data, between the first node (A) and the second node (F), comprising:
∘ the identifiers of each node (IDA, IDF)
∘ the size of each sub-network (p, q)
∘ the identifier of each sub-network (ID₂₀, ID₂₁);
• a comparison (COMP) of the sizes (p, q) of each sub-network (20, 21) and a definition of a master node (NMA) and of a slave node (NES) among the first (A) and the second node (F) based on the comparison (COMP) of the sizes (p, q) of each sub-network (20, 21) and a rule, the slave node (NES) retrieving a set of identifiers of the nodes of the sub-network of the master node (NMA) as well as the IP addresses associated with each one of said identifiers, the determination of the slave node (NES) and of the master node (NMA) making it possible to initialise a merger of the two sub-networks into a single network.

2. Method according to claim 1, **characterised in that**:
• the authentication data set is a table (ID TABLE) comprising identifiers of nodes (IDi) and their associated IP addresses (IPi);
• the initialisation data further comprises an indication that a merger situation is underway, called merger variable.

3. Method according to any of claims 1 to 2, **characterised in that** a merger situation that requires a merger of the two sub-networks (20, 21) is recognised by:
• a first node (A) when a discovery frame (M1) of a routing protocol is received coming from the second node (F) and comprises an unknown identifier (IDF) of the first node (A) and the second node (F) already has an IP address (IPF) and/or;
• a second node (F) when it receives, from a first node (A) having discovered it beforehand, a variable indicating that a merger situation has been recognised by the first node (A).

4. Method according to any of claims 1 to 3, **characterised in that**:
• a generation of a message (GEL), referred to as a freezing message, by the master node (NMA) to all the known nodes of its authentication data set (ID TABLE(NMA)) including to the slave node (F) is a message comprising the identifiers (ID20, ID21) of the two sub-networks (20, 21) and an indication that a merger operation is instantiated;
• a generation of a message (GEL), referred to as a freezing message, by the slave node (NES) to all the known nodes of its authentication data set (ID TABLE(NES)) is a message comprising the identifiers (ID20, ID21) of the two sub-networks (20, 21) and an indication that a merger operation is instantiated.

5. Method according to claim 4, **characterised in that**:
• each node that receives the freezing message (GEL) freezes:
∘ any other analysis regarding messages received from unknown nodes;
∘ any allocation of IP address for a new incoming node in a sub-network;
∘ any other merger request coming from another node,
• each node that receives the freezing message (GEL) records:
∘ the identifiers (ID20, ID21) of the two sub-networks (20, 21) and activates a holding state with regards to the merger situation until it receives a message (DEGEL) indicating that the merger phase is terminated.

6. Method according to any of claims 1 to 5, **characterised in that** the size (p, q) of a sub-network (20, 21) corresponds to the number of known nodes (i) in the authentication data set (ID TABLE(i)) of a node (i) of said sub-network (20, 21).

7. Method according to any of claims 1 to 6, **characterised in that** the rule defines that the slave node (F) is the node that belongs to the sub-network (21) of the smaller size (q).

8. Method according to any of claims 1 to 6, **characterised in that** the rule defines that when the sizes (p, q) of the two sub-networks (20, 21) are identical, the slave node (NES) is chosen from the one that has the network identifier (ID₂₀, ID₂₁) of the higher value.

9. Method according to claim 1, **characterised in that** the identifier of the single merged network corresponds to the identifier (ID₂₀, ID₂₁) of the node of the sub-network (20, 21) that has the higher value.

10. System for detecting a merger situation of two ad hoc sub-networks (20, 21) implementing the D2HCP addressing protocol, the first sub-network (20) comprising a plurality (p) of nodes (A, B, C) and the second sub-network (21) comprising a plurality (q) of nodes (E, F), **characterised in that** at least one first node of the first sub-network and one node of the second sub-network are configured to implement the method for detecting a merger situation of any one of claims 1 to 9.
